(19) Europäisches Patentamt
European Patent Office
Office européen des brevets

(11) Publication number : **0 666 290 A1**

(12) **EUROPEAN PATENT APPLICATION**

(21) Application number : **95300730.9**

(22) Date of filing : **06.02.95**

(51) Int. Cl.$^6$ : **C09D 4/00,** C09D 4/06, C09D 167/07, C08F 8/42, C08F 290/06, C08F 290/14

(30) Priority : **08.02.94 US 193335**

(43) Date of publication of application : **09.08.95 Bulletin 95/32**

(84) Designated Contracting States : **AT CH DE FR GB IT LI NL SE**

(71) Applicant : **DOW CORNING CORPORATION**
**3901 S. Saginaw Road**
**Midland Michigan 48686-0994 (US)**

(72) Inventor : **Blizzard, John Donald**
**1000 N. Hampton**
**Bay City, Michigan (US)**
Inventor : **Tonge, James Steven**
**3105 Lakeview Drive**
**Sanford, Michigan (US)**

(74) Representative : **Kyle, Diana**
**Elkington and Fife**
**Prospect House**
**8 Pembroke Road**
**Sevenoaks, Kent TN13 1XR (GB)**

(54) **Abrasion-resistant coating.**

(57) Radiation-curable abrasion-resistant coatings are formulated from (A) multifunctional acrylate polymers and (B) a silane-based composition. The multifunctional acrylate polymers are selected from the group consisting of polyester acrylates, epoxy acrylates, urethane acrylates and admixtures of the aforesaid. The silane-based composition is a combination of : a Michael adduct formed from a multifunctional acrylate monomer and an aminofunctional silane ; and colloidal silica. The composition of the invention can be varied within the claimed compositional limits to provide materials for floor coatings that exhibit various properties including stain resistance, adhesion to a specific substrate and flexibility.

EP 0 666 290 A1

The present invention relates generally to abrasion-resistant coatings and more particularly to a coating composition which includes: (A) a multifunctional acrylate polymer selected from epoxy acrylates, urethane acrylates, polyester acrylates and admixtures thereof; and (B) a silane-based composition which includes a Michael adduct formed from an amino-functional silane, a multifunctional acrylate monomer and colloidal silica.

Numerous compositions for forming abrasion-resistant coatings on various types of substrates are well-known in the art. Silicone compositions of this type are described in US-A 4,455,205 to Olson et al, issued June 19, 1984. Those coatings comprise an ultraviolet light-curable (UV-curable) composition prepared from a multifunctional acrylate monomer, an acryloxyfunctional silane and aqueous colloidal silica in a polar solvent. After mixing the components, the solvent and remaining water are removed in vacuo, with gentle heating, a step which is termed "stripping". A photoinitiator can be added and the composition UV-cured.

Similarly, US-A 4,486,504 to Chung, issued December 4, 1984, discloses a UV-curable composition prepared from the addition of a multifunctional acrylate monomer to a mixture of acryloxyfunctional silanes and/or glycidoxyfunctional silanes and aqueous colloidal silica. With the addition of a photoinitiator, the composition may be UV-cured after stripping.

Such abrasion-resistant coatings are frequently applied over polycarbonate substrates, which may be used as a substitute for glass, as in the case of lenses for automobile head lamps.

The prior art coatings are not, however, generally used to protect flooring materials. These compositions are expensive to produce and generally lack the flexibility that some flooring applications require. For instance, vinyl sheet flooring materials are often stored in rolls and the stress produced from rolling can induce cracking in a brittle coating.

Flooring materials are therefore coated with radiation-curable multifunctional acrylate polymers. Commonly used multifunctional acrylate polymers for this application include: epoxy acrylates; aliphatic urethane acrylates; aromatic urethane acrylates; and polyester acrylates. These polymers are relatively inexpensive and can provide a flexible protective coating over vinyl flooring materials.

Those skilled in the art will recognize that the terms "oligomer" and "polymer" are frequently used interchangeably. Although the term "oligomer" is generally used to describe a relatively short polymer, the term has no generally accepted definition with respect to the number of repeating monomer units. As used herein then, the term "polymer" is meant to include molecules that may also be properly referred to as "oligomers."

For vinyl flooring, coatings of the aliphatic urethane acrylate-type readily survive the deformation imposed by the practice of storing such materials in rolls. Coatings of this type, however, suffer from the drawback of exhibiting less than desirable stain and abrasion resistance.

In the case of wood flooring materials, flexibility is not an important feature for a coating. However, some coating compositions, such as the polyester acrylate-type, exhibit poor adhesion and abrasion resistance.

Contrastingly, coatings of the multifunctional acrylate polymer-type, in virtually all cases, fail to provide the desired level of stain protection.

We have overcome the drawbacks of the prior art by introducing a composition which forms a transparent and adherent coating upon curing. Furthermore, our coating composition offers increased stain and abrasion resistance over the multi-functional acrylate polymers of the prior art. Our coating composition may also be formulated to offer sufficient flexibility to resist cracking when applied over vinyl sheet flooring materials that are stored in a rolled configuration. Finally, the coating composition of the present invention avoids the high cost associated with the prior art silicone compositions.

In the present invention there is provided a radiation-curable composition for forming an abrasion-resistant coating on at least one substrate, said composition comprising:

(A) a multifunctional acrylate polymer selected from the group consisting of polyester acrylates, epoxy acrylates, urethane acrylates and admixtures thereof; and

(B) a silane-based composition comprising:

(a) a Michael adduct formed from: a multifunctional acrylate monomer; and an aminofunctional silane having the following formula:

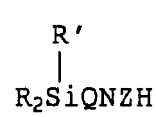

wherein:

R is an alkoxy or alkyl group having 1 to 4 carbon atoms, which R groups may be the same or different;

R' is an alkoxy group;
Q is a divalent hydrocarbon group; and
Z is hydrogen or a monovalent hydrocarbon group;
said multifunctional acrylate monomer being present in an amount greater than a two-to-one Michael adduct equivalency with respect to said aminofunctional silane; and
(b) colloidal silica;

component (A) being present in at least 5 parts per 100 parts, by weight, of the sum of components (A) and (B),

said composition, when cured, exhibiting a Taber abrasion resistance of 10 or less for T-100 and 15 or less for T-500; and

said composition exhibiting 100 percent adhesion on a cross-hatch adhesion test, when cured on said at least one substrate.

The silane-based composition (B) is formulated before blending with (A) the multifunctional acrylate polymer. In a preferred embodiment, in formulating component (B), the Michael adduct (a) is first formed in a polar solvent and the residual alkalinity of the amino-functional silane is neutralized by the addition of an acid, prior to the addition of the colloidal silica. Such neutralization may be carried out with glacial acetic or acrylic acid. The residual alkalinity of the amino-functional silane would otherwise cause the system to gel or the colloidal silica to precipitate from suspension if left unneutralized.

Before blending with the multifunctional acrylate polymer (A), the silane-based composition (B) is preferably further processed by adding an acrylate-terminated polyoxyalkylene and then stripping the volatiles (i.e., water and other polar solvents) therefrom. The addition of the acrylate-terminated polyoxyakylene helps prevent the silane-based composition from gelling during the stripping step and lends further flexibility to the composition of our invention.

The coating composition may be applied to a substrate by any conventional means such as dipping, spraying, roll coating or brushing. Various leveling agents, known in the art, can be added to our composition to aid in providing a coating of substantially uniform thickness. A coating thickness of 3 to 5 micrometers is generally preferred.

Finally, photoinitiators may be added to the composition of the invention if a UV-curable system is desired. Curing without the use of photoinitiators can be carried out by exposing the composition of the invention to other forms of radiation, including electron beam radiation.

By varying the constituents of our composition within the parameters outlined, the properties of the coating composition of the invention can be adjusted to solve selective problems presented by the prior art coatings. For application to vinyl sheet flooring substrates, our composition can be varied to provide flexibility, stain resistance and abrasion resistance. In the case of wood and vinyl tile flooring substrates, our composition can be varied to provide good adhesion in combination with excellent stain and abrasion resistance.

It is a novel feature of the present invention that the abrasion-resistant coating taught herein has improved adhesion to certain substrates, as compared to the multifunctional acrylate polymer coatings of the prior art.

While examples of this invention are directed to forming an abrasion-resistant coating on a select few substrates and in particular to substrates usable as flooring materials, the invention is not so-limited. Indeed, the invention is limited only by its composition and the requirements that the cured coating on a given substrate exhibits 100 percent adhesion as measured by a cross-hatch adhesion test and abrasion resistance of a minimum Taber test value (both of which tests are explained below.)

Accordingly, the radiation-curable composition of the present invention comprises: (A) a multifunctional acrylate polymer selected from polyester acrylates, epoxy acrylates, urethane acrylates and admixtures thereof; and (B) a silane-based composition, wherein component (A), the multifunctional acrylate polymer, is present in at least 5 parts based upon a total of 100 parts by weight, of the combination of (A) and (B).

Because the present invention is directed to obtaining the best properties from both components (A) and (B), our composition is limited to compositions including a minimum of 5 parts of component (A) per 100 parts of the sum of components (A) and (B).

As used herein, the term "urethane acrylate" includes both aliphatic and aromatic urethane acrylates. Also, the term "multifunctional acrylate polymer" is a polymer which contains two or more functional groups selected from acryloxy and methacryloxy groups. The multifunctional acrylate polymers may be used singly or in combination with other multifunctional acrylate polymers from the selected group.

Examples of some of the preferred specific multifunctional acrylate polymers of the selected group are as follows:

epoxy acrylates

Bisphenol A epoxy diacrylate, available from Sartomer Company, Inc. of Exton, PA and sold under the designation CN104™. CN104™ has a viscosity of 3500 cps (mPa·s) at 65°C. and a specific gravity of 1.15.

urethane acrylates

Hexafunctional aromatic urethane acrylate with an acrylated polyol diluent which is sold under the designation Ebecryl™ 220 by UBC Radcure, Inc. of Louisville, KY. Ebecryl™ 220 has a number average molecular weight of 1,000 and a viscosity of 28,000 cps (mPa·s) at 25°C.

Aliphatic urethane diacrylate which is available under the designation Ebecryl™ 230 from UBC Radcure, Inc. of Louisville, KY. Ebecryl™ 230 has a number average molecular weight of 5,000 and a viscosity of 40,000 cps (mPa·s) at 25°C.

polyester acrylate

Tetrafunctional polyester acrylate which is sold under the designation Ebecryl™ 80 by UBC Radcure, Inc. of Louisville, KY. Ebecryl™ 80 has a number average molecular weight of 1,000 and a viscosity of 3,500 cps at 25°C.

Component (B) of this invention is a silane-based composition which comprises:

(a) a Michael adduct formed from:

(1) at least one multifunctional acrylate monomer; and

(2) an aminofunctional silane having the following formula:

$$R_2\overset{\displaystyle R'}{\overset{|}{Si}}QNZH$$

wherein

R is an alkoxy or alkyl group having 1 to 4 carbon atoms, which R groups may be the same or different;

R' is an alkoxy group;

Q is a divalent hydrocarbon group; and

Z is hydrogen or a monovalent hydrocarbon group;

said multifunctional acrylate monomer being present in an amount greater than a two-to-one Michael adduct equivalency with respect to the aminofunctional silane; and

(b) colloidal silica.

The preparation of some embodiments of component (B), and improvements thereof, are respectively taught in US-A 5,260,350 and US-A 5,368,941.

The Michael adduct (a) of component (B) is formed from (1) at least one multifunctional acrylate and (2) an aminofunctional silane. As used for component (B), the term "multifunctional acrylate monomer" means a monomer which contains two or more functional groups selected from acryloxy and methacryloxy groups.

The multifunctional acrylate monomers (1) may be used singly or in combination for reaction with (2) the aminofunctional silane to form the Michael adduct (a).

The molar ratio of multifunctional acrylate monomer (1) to the aminofunctional silane (2) must be such that the acrylate (1) is present in an amount which is at least sufficient to form a two-to-one Michael adduct equivalency. Because one amine group reacts with one acrylate group to form a Michael adduct and because it is desirable to have at least one unreacted acrylate group on the Michael adduct to effect curing of the composition of the invention, a one-to-one molar ratio of a diacrylate to monoamino-functional silane yields a two-to-one Michael adduct equivalency.

In a preferred composition of the invention, the Michael adduct equivalency between components (1) and (2) may be as high as 10:1 or greater. In other words, the use of multifunctional acrylate monomer (1) in an amount substantially in excess of that which can react with the aminofunctional silane (2) to form the Michael adduct (a), has no deleterious effect on the composition of the invention.

Some preferred multifunctional acrylate monomers useable as component (1) include:

the following diacrylates

1,6-hexanediol diacrylate,
1,4-butanediol diacrylate,
ethylene glycol diacrylate,
diethylene glycol diacrylate,
tetraethylene glycol diacrylate,
tripropylene glycol diacrylate,
neopentyl glycol diacrylate,
1,4-butanediol dimethacrylate,
poly(butanediol) diacrylate,
tetraethylene glycol dimethacrylate,

1,3-butylene glycol diacrylate,
triethylene glycol diacrylate,
triisopropylene glycol diacrylate,
polyethylene glycol diacrylate and
bisphenol A dimethacrylate;
the following triacrylates
trimethylolpropane triacrylate,
trimethylolpropane trimethacrylate,
pentaerythritol monohydroxy triacrylate and
trimethylolpropane triethoxy triacrylate;
the following tetraacrylates
pentaerythritol tetraacrylate and
di-trimethylolpropane tetraacrylate;
and a pentaacrylate known as
dipentaerythritol (monohydroxy) pentaacrylate.

The above-listed multifunctional acrylate monomers are commercially available from Aldrich Chemical Company, Inc., Milwaukee, Wisconsin.

The second component (2) of the Michael adduct (a) of the silane-based composition (B) is the aminofunctional silane of the previously-described general formula. Examples of aminofunctional silanes (2) useful for formulating the Michael adduct (a) include:
3-aminopropyltriethoxysilane;
3-aminopropyltrimethoxysilane; and
3-aminopropylmethyldimethoxysilane.

These aminofunctional silanes are commercially available from Huls America, Inc., Bristol, PA.

The second component (b) of the silane-based composition (B) comprises silica in the form of a colloidal dispersion. Colloidal silica is a dispersion of submicrometer-sized silica ($SiO_2$) particles in an aqueous or other solvent medium (such as alcohol or other organic solvent which may be combined with water.) Colloidal silica is available in acidic or basic form. Although either form may be utilized, basic colloidal silicas must first be acidified, by means such as an organic acid, lest the silane-based composition (B) gels or the silica therein precipitates from colloidal dispersion.

Examples of satisfactory colloidal silicas for use in the composition of the invention include Nalco® 1034A, Nalco® 1057 and Nalco® 1129 all of which can be obtained from Nalco Chemical Company, Naperville, IL.

Nalco® 1034A has a mean particle size of 20 nm, an $SiO_2$ content of approximately 34% by weight in water and a pH of approximately 3.1. Nalco® 1057 has a mean particle size of 20nm and an $SiO_2$ content of approximately 30% by weight in a solution of propoxyethanol. Nalco® 1129 has a mean particle size of 20nm and an $SiO_2$ content of approximately 30% by weight in a solution of 40% 2-propanol (IPA) and 30% water. Unless otherwise stated, as reported herein the weight percents or parts of colloidal silica in the composition of the invention do not include the weight of liquid dispersant.

In a preferred embodiment of the invention, the silane-based composition (B) includes one or more acrylate-terminated polyoxyalkylenes. The acrylate-terminated polyoxyalkylenes aid in stripping the silane-based composition (B) and augment flexibility without sacrificing abrasion resistance. Examples of suitable acrylate-terminated polyoxyalkylenes include:
diethyleneglycol diacrylate ("DEGDA");
tetraethyleneglycol diacrylate ("TEGDA"); and
polyethyleneglycol diacrylate ("PEGDA").

The DEGDA, TEGDA and PEGDA monomers are all available from Sartomer Company, Inc. of Exton, PA and sold under the names Sartomer® 230, 268 and 344, respectively. It should be noted that DEGDA, TEGDA and PEGDA all differ by the number of oxyethylene groups between the acrylate terminals of the monomers. Thus, a convenient way to designated the length of the monomer is with reference to the number of carbon atoms between the acrylate terminals ("$C_n$"). DEGDA, TEGDA and PEGDA have $C_n$ = 4, 8 and 16, respectively.

In accordance with the invention, the silane-based composition (B) is prepared as follows:

The multifunctional acrylate (1) is dissolved in a polar solvent, such as isopropyl alcohol. The aminofunctional silane (2) is then slowly added to the solution under conditions of constant agitation. The Michael addition reaction between components (1) and (2) is preferably carried out at room temperature to prevent thermal degradation of the acrylate functionality. Components (1) and (2) should be permitted to react to substantial equilibrium, which, at room temperature, requires anywhere from one to seventy two hours.

Even though the amine in component (2) is permitted to react to substantial equilibrium, the amino groups in the Michael adduct (a) cause the solution to exhibit residual alkalinity. This residual alkalinity can be neutralized by the addition of an appropriate amount of an acid, such as acetic or acrylic acid. Without such acid neutralization, the subsequent addition of colloidal silica (b) causes gelling of the silane-based composition (B) or the precipitation of the silica particulate from dispersion.

When using an acidic colloidal silica dispersion, such as Nalcoag™ 1034A (pH = 3.1), the solution of the Michael adduct (a) and polar solvent should be acid-neutralized to a pH of less than 7 and preferably in the range of 5 to 6, to avoid the aforesaid gelling or precipitation.

After acid-neutralization, the colloidal silica (b), in the liquid dispersion, is slowly added to the pH-adjusted solution of the Michael adduct (a) under conditions of constant agitation.

Finally, before the volatiles (i.e., polar solvent and colloidal silica dispersant) are stripped from the solution, it is preferred that the above-mentioned one or more acrylate-terminated polyoxyalkylenes (c) be added to the silane-based composition (B). By making an addition of acrylate-terminated polyoxyalkylenes before stripping, the tendency of the composition to gel upon stripping can be greatly reduced.

In our experimental compositions, various amounts of component (B), the silane-based composition, were blended with various multifunctional acrylate polymers, component (A), yielding some compositions within the scope of the present invention.

The preparation of component (B), utilizing a Michael adduct formed from an aminopropyltriethoxy silane and a mixture of trimethylolpropane triacrylate and hexandiol diacrylate is set forth below.

Component (B) was prepared as follows (all quantities designated herein as parts are parts by weight unless otherwise indicated and all additions and times for reaction are under conditions of constant mixing):

1. 650 parts of isopropanol ("IPA"), 239 parts trimethylolpropane triacrylate ("TMPTA"), 86 parts 1,6 - hexanediol diacrylate ("HDDA") and 0.44 parts phenothiazine ("PTZ," known in the art as an inhibitor that prevents autopolymerization of acrylates) were mixed in a glass vessel for 15 minutes.
2. 69 parts of aminopropyltriethoxy silane ("APTES") were then slowly added to the above solution. The TMPTA and HDDA were allowed to react with the APTES for one hour to form the Michael adduct, component (a).
3. Thereafter, 75 parts of acrylic acid were added to the above solution, bringing the pH of the solution down from 9 to between 5 and 6.
4. 709 parts of Nalco® 1034A colloidal silica (having 241 parts silica solids) were premixed with 220 parts IPA and then added to the solution obtained in step 3. Mixing was continued for an additional hour and the resulting composition had a pH of 5.
5. Next, 142 parts of diethyleneglycol diacrylate were added and mixing continued for an additional 15 minutes.
6. Finally, the silane-based composition was stripped of volatiles (i.e., IPA and water). Stripping was carried out at a temperature of 70°C. and at a vacuum of 83.7 mm Hg (11.2 kPa). During the stripping step, a gas mixture of 4% oxygen and 96% nitrogen was bubbled through the composition to preserve the efficacy of the PTZ inhibitor.

After stripping, the "solids" make-up of the silane-based composition (B) based upon the constituent materials was as follows:

| constituent | weight % |
|---|---|
| trimethylolpropane triacrylate | 28.4 |
| 1,6 - hexanediol diacrylate | 10.2 |
| aminopropyltriethoxy silane | 8.2 |
| acrylic acid | 9.0 |
| silica | 27.5 |
| diethyleneglycol diacrylate | 16.9 |
| phenothiazine | 0.05 |

The various multifunctional acrylate polymers used in the experimental compositions reported in the Tables below included: a hexafunctional aromatic urethane acrylate in an acrylated polyol diluent, having a number average molecular weight of 1,000 and a viscosity of 28,000 cps (mPa·s) at 25°C. and sold under the designation Ebecryl™ 220 by UBC Radcure, Inc. of Louisville, KY (designated as "E220" in Tables I-I, I-II, II-I and II-II); bisphenol A epoxy diacrylate, having a viscosity of 3500 cps (mPa·s) at 65°C., a specific gravity of 1.15,

commercially available from Sartomer Company, Inc. of Exton PA. and sold under the designation CN104™ (designated as "CN104" in Tables III-I and III-II); tetrafunctional polyester acrylate having a number average molecular weight of 1,000 and a viscosity of 3,500 cps (mPa·s) at 25°C. and sold under the name Ebecryl™ 80 by UBC Radcure, Inc. of Louisville, KY (designated as "E80" in the Tables IV-I and IV-II); hexafunctional aliphatic urethane diacrylate containing an acrylate polyol diluent, having a number average molecular weight of 1,000, a viscosity of 450 cps (mPa·s) at 65°C. and commercially available from UBC Radcure, Inc. of Louisville, KY under the designation Ebecryl™ 8301 (sometimes designated "E8301" hereinafter); and admixtures thereof.

The experimental compositions, which comprised blends of components (A) and (B), were made such that the relative quantities of the components were varied in increments of ten weight percent. Thus, the experimental compositions ranged from substantially pure (A) to pure (B). The term "substantially pure" (A) is used because in some instances the component is sold with an added diluent and in some instances (as explained below) a diluent was intentionally added to component (A). In such instances, reported parts (A) refer to the constituent as diluted.

When necessary, a small addition of isobornyl-acrylate (designated "IBA" in the Tables) was used to reduce the viscosity of component (A), thereby greatly aiding its blending with component (B). Twenty-five parts, by weight, of IBA added to seventy-five parts of multifunctional acrylate polymer is generally sufficient.

A photoinitiator was added to those blends of components (A) and (B) that proved compatible or were rendered compatible with a cosolvent (as explained hereinafter). Four (4) parts of Darocure™ 1173 (from Ciba-Geigy, Inc. of Hawthorne NY) per one hundred (100) parts of the combined weight of (A) and (B) was used.

The experimental compositions were then applied to polycarbonate sheet (0.011 inch [0.028 cm] thick and designated "pc" in the Tables,) sheet vinyl flooring (0.055 inch [0.14 cm] thick, sold under the trade name Ceramique™ by Tarkett, Inc. of Parsippany, NJ and designated "sv" in the Tables) and Taber test panels. Coating was carried out using a wire-wound rod and the coated specimens were UV-cured in a belt fed UV oven (set at 300 watts with a belt speed of 6 ft. [1.83 m] per minute and available from Hanovia, Inc. of Newark, NJ). Final cured coating thickness was between about 3 and 5 micrometers.

The cured coatings were then tested for abrasion resistance, flexibility, adhesion and stain resistance, as described below.

The flexibility of the experimental compositions is directly related to the elongation the coating can withstand without exhibiting signs of cracking or spalling from a substrate. Strips 1 1/8 inch (2.8375 cm) wide were cut from the coated polycarbonate and vinyl sheets. The strips were then sequentially bent 180° about cylindrical mandrels of successively smaller diameters. The bending was carried out with the uncoated surface in contact with the mandrel surface. After each bend, the coating was visually inspected for any signs of cracking, with the aid of a ten power jeweler's loop. The smallest diameter mandrel bend which produced no visible cracking is reported herein.

The percent elongation (% el.) exhibited by the experimental coating as a result of the bend test can be estimated by the following formula. The formula assumes: the thickness of the coating is negligible compared to the thickness of the underlying polycarbonate specimen; frictionless contact between the specimen and the mandrel; and a neutral stress plane at one-half the thickness of the specimen.

$$\%\ el. = 100 \times T/(D + T)$$

where

T = the thickness of the polycarbonate sheet;

and

D = the diameter of the mandrel.

The mandrel diameters used to subject the experimental compositions to the guided bend test are listed below.

| D inch (cm) |
|---|
| 1.00 (2.54) |
| 0.875 (2.22) |
| 0.750 (1.91) |
| 0.612 (1.55) |
| 0.563 (1.43) |
| 0.500 (1.27) |
| 0.437 (1.11) |
| 0.375 (0.953) |
| 0.313 (0.792) |
| 0.250 (0.635) |
| 0.187 (0.475) |

0.154 (0.391)
0.125 (0.318)

Reported in the Tables below is the smallest diameter mandrel which failed to produce cracking in specimen subjected to the guided bend test. In those instances where the largest mandrel (i.e., 1.00 inch) still resulted in cracking, the result is reported as "1.0+." In those instances where the specimen failed to show any signs of cracking even after being subjected to the guided bend test about the smallest mandrel (i.e., 0.125 inch) and again showed no signs of cracking when the specimen was folded over on itself, the results are reported as "-0.125."

Abrasion resistance was determined according to ASTM Method D-1044. The instrument used was a Teledyne™ model 503 Taber Abrader with two 250 gram weights (500 gram load) for each of the CS10F abrasive wheels. In the ASTM method, coated polycarbonate Taber panels were subjected to 100 and 500 cycles on the abrader turntable (T-100 and T-500, respectively). The percent change in haze, which is the criterion for determining the abrasion resistance of the coating, was determined by measuring the difference in haze of the unabraded and abraded coatings. Haze is defined as the percentage of transmitted light which, in passing through the sample, deviates from the incident beam by forward scattering. In this method, only light flux that deviates more than 2.5 degrees on the average is considered to be haze. The percent haze on the coatings was determined by ASTM Method D-1003. A Gardner Haze Meter was used and the haze was calculated by measuring the amount of diffused light, dividing by the amount of transmitted light and multiplying by one hundred.

It will be understood by those skilled in the art that this type of Taber abrasion testing is not limited to the use of polycarbonate test panels. In the event that a given composition does not adhere to a polycarbonate substrate, any other substantially transparent, preferably plastic, substrate may be used, so long as the composition adheres thereon.

Adhesion was measured by a cross-hatch adhesion test. A series of cross-hatched lines were scribed over one square inch (2.54 square cm) of the surface of a substrate coated with a cured experimental composition. The scribed lines are spaced approximately 1/10 inch (2.5 mm) apart so as to form 100 squares, measuring approximately 1/10 inch (2.5 mm) on a side. The scribed surface is covered with No. 600 Scotch Brand™ adhesive tape which is pressed down firmly over the cross-hatched area. The tape is then withdrawn from the surface of the substrate with one rapid motion at a 90° angle. The action of applying and removing the tape is carried out three times, after which the specimen is observed. The number of squares remaining intact on the substrate is a measure of the adhesion of the experimental composition. The number of squares remaining intact is reported as a percentage of the total number of squares on the grid.

Stain tests were conducted on white vinyl sheet flooring material of 0.055 inch (0.1232 cm) thickness which was coated with experimental coating compositions to yield a cured coating thickness of 3 to 5 μm. The samples measured approximately 3 inch (7.62 cm) X 4 1/2 inch (11.4 cm) and were thoroughly cleaned before testing. A two inch (5.1 cm) square of a single layer of absorbent paper (white, facial tissue grade or toilet paper) was placed in the center of the sample. A solution of 0.5% Yellow N (#4957) dye in kerosene was dripped on the paper with a medicine dropper. Five drops of solution were used to soak the paper without causing excess dye to contact the sample. Any air bubbles under the absorbent paper were worked out with a glass rod or spatula and the dye was allowed to remain in contact with the sample for thirty (30) minutes.

After 30 minutes, the area was wiped dry of dye solution and visually compared to an untreated specimen. The amount of staining on the test specimens was rated from 0 to 5, with 0 corresponding to no staining and 5 corresponding to a stain substantially as dark as the staining dye itself.

**TABLE I-I. (A) = E220 HEXAFUNCTIONAL AROMATIC URETHANE ACRYLATE**

| Sample No. | (B) | (A) | LT | HAZE | VISC |
|---|---|---|---|---|---|
| 1-1* | 100 | 0 | 92.0 | 0.13 | 1,110 |
| 1-2 | 90 | 10 | 91.6 | 0.50 | 1,360 |
| 1-3 | 80 | 20 | 91.8 | 0.37 | 1,510 |
| 1-4 | 70 | 30 | 91.3 | 0.37 | 1,950 |
| 1-5 | 60 | 40 | 92.3 | 0.37 | 2,720 |
| 1-6 | 50 | 50 | 91.7 | 0.47 | 3,360 |
| 1-7 | 40 | 60 | 91.7 | 0.57 | 5,460 |
| 1-8 | 30 | 70 | 91.9 | 0.80 | 8,200 |
| 1-9 | 20 | 80 | 91.6 | 0.80 | 12,400 |
| 1-10* | 10 | 90 | 91.3 | 0.83 | 18,900 |
| 1-11* | 0 | 100 | 91.6 | 1.1 | 27,900 |

*Comparison Example

**TABLE I-II. (A) = E220 HEXAFUNCTIONAL AROMATIC URETHANE ACRYLATE**

| Sample No. | T-100 | T-500 | FLEXpc | ADHpc | FLEXsv | ADHsv | STAINsv |
|---|---|---|---|---|---|---|---|
| 1-1* | 2.57 | 9.20 | 0.125 | 100 | 0.500 | 100 | 0 |
| 1-2 | 2.53 | 8.20 | 0.375 | 100 | 0.500 | 100 | 0 |
| 1-3 | 2.60 | 9.10 | 0.375 | 100 | 0.750 | 100 | 0 |
| 1-4 | 2.70 | 10.3 | 0.500 | 100 | 0.750 | 100 | 0 |
| 1-5 | 2.53 | 9.10 | 0.750 | 100 | 0.750 | 100 | 0 |
| 1-6 | 2.20 | 9.10 | 0.563 | 50 | 0.875 | 100 | 0 |
| 1-7 | 2.46 | 9.96 | 0.563 | 80 | 0.875 | 100 | 0 |
| 1-8 | 1.87 | 13.3 | 0.75+ | 0 | 1.0+ | 100 | 1 |
| 1-9 | 2.10 | 15.5 | 0.75+ | 90 | 1.0+ | 100 | 2 |
| 1-10* | 2.47 | 17.4 | – | 0 | 1.0+ | 95 | 2 |
| 1-11* | 2.80 | 15.0 | – | 0 | 1.0+ | 100 | 2 |

*Comparison Example

**TABLE II-I. (A) = 75 PARTS E220 HEXAFUNCTIONAL AROMATIC URETHANE ACRYLATE WITH 25 PARTS IBA**

| Sample No. | (B) | (A) | LT | HAZE | VISC |
|---|---|---|---|---|---|
| 2-1* | 100 | 0 | 92.0 | 0.13 | 1,110 |
| 2-2 | 90 | 10 | 91.9 | 0.70 | 910 |
| 2-3 | 80 | 20 | 92.1 | 0.27 | 1,000 |
| 2-4 | 70 | 30 | 91.8 | 0.40 | 741 |
| 2-5 | 60 | 40 | 92.0 | 0.67 | 591 |
| 2-6* | 50 | 50 | 91.8 | 0.40 | 681 |
| 2-7* | 40 | 60 | 92.0 | 0.30 | 882 |
| 2-8* | 30 | 70 | 91.9 | 0.43 | 1,110 |
| 2-9* | 20 | 80 | 91.8 | 0.30 | 842 |
| 2-10* | 10 | 90 | 91.8 | 0.43 | 1,040 |
| 2-11* | 0 | 100 | 91.7 | 1.17 | 1,320 |

*Comparison Example

**TABLE II-II. (A) = 75 PARTS E220 HEXAFUNCTIONAL AROMATIC URETHANE ACRYLATE WITH 25 PARTS IBA**

| Sample No. | T-100 | T-500 | FLEXpc | ADHpc | FLEXsv | ADHsv | STAINsv |
|---|---|---|---|---|---|---|---|
| 2-1* | 2.57 | 9.20 | 0.125 | 100 | 0.500 | 100 | 0 |
| 2-2 | 3.97 | 9.13 | 0.375 | 100 | -0.125 | 100 | 0 |
| 2-3 | 4.06 | 11.6 | 0.375 | 100 | -0.125 | 100 | 0 |
| 2-4 | 6.65 | 15.9 | 0.375 | 100 | -0.125 | 100 | 0 |
| 2-5 | 4.50 | 15.2 | 0.313 | 100 | 0.375 | 100 | 1 |
| 2-6* | 5.90 | 16.0 | 0.313 | 100 | 0.562 | 100 | 1 |
| 2-7* | 7.60 | 20.5 | 0.250 | 100 | 0.562 | 100 | 1 |
| 2-8* | 5.97 | 17.1 | 0.250 | 90 | 0.313 | 100 | 1 |
| 2-9* | 6.93 | 26.4 | - | 5 | 0.375 | 60 | 2 |
| 2-10* | 7.37 | 31.0 | - | 0 | 0.375 | 75 | 2 |
| 2-11* | 7.20 | 28.3 | - | 0 | -0.125 | 70 | 4 |

*Comparison Example

**TABLE III-I. (A) = 75 PARTS CN104 BISPHENOL A EPOXY DIACRYLATE WITH 25 PARTS IBA**

| Sample No. | (B) | (A) | LT | HAZE | VISC |
|---|---|---|---|---|---|
| 3-1* | 100 | 0 | 92.0 | 0.13 | 1,110 |
| 3-2 | 90 | 10 | 91.8 | 0.53 | 942 |
| 3-3 | 80 | 20 | 91.6 | 0.37 | 952 |
| 3-4* | 70 | 30 | 91.8 | 0.83 | 1,320 |
| 3-5* | 60 | 40 | 91.3 | 0.70 | 1,990 |
| 3-6* | 50 | 50 | 91.3 | 0.47 | 2,820 |
| 3-7* | 40 | 60 | 91.5 | 0.97 | 4,060 |
| 3-8* | 30 | 70 | 91.7 | 1.2 | 6,210 |
| 3-9* | 20 | 80 | 91.3 | 0.73 | 9,690 |
| 3-10* | 10 | 90 | 91.1 | 0.40 | 14,500 |
| 3-11* | 0 | 100 | 91.5 | 0.57 | 19,700 |

*Comparison Example

**TABLE III-II. (A) = 75 PARTS CN104 BISPHENOL A EPOXY DIACRYLATE WITH 25 PARTS IBA**

| Sample No. | T-100 | T-500 | FLEXpc | ADHpc | FLEXsv | ADHsv | STAINsv |
|---|---|---|---|---|---|---|---|
| 3-1* | 2.57 | 9.20 | 0.125 | 100 | 0.500 | 100 | 0 |
| 3-2 | 7.64 | 13.9 | 0.313 | 100 | -0.125 | 100 | 0 |
| 3-3 | 7.30 | 15.7 | -0.125 | 50 | 0.313 | 100 | 0 |
| 3-4* | 10.9 | 17.4 | -0.125 | 0 | 0.313 | 100 | 0 |
| 3-5* | 9.73 | 23.8 | -0.125 | 0 | 0.250 | 95 | 0 |
| 3-6* | 14.5 | 31.5 | 0.313 | 0 | 0.500 | 20 | 0 |
| 3-7* | 15.2 | 40.1 | 0.313 | 0 | 0.562 | 0 | 0 |
| 3-8* | 19.0 | 42.6 | 0.375 | 0 | 1.0+ | 0 | 0 |
| 3-9* | 27.9 | - | 0.750 | 0 | 1.0+ | 0 | 0 |
| 3-10* | 28.6 | - | 1.00 | 0 | 1.0+ | 0 | 0 |
| 3-11* | 32.3 | - | 1.00 | 0 | 1.0+ | 0 | 0 |

*Comparison Example

TABLE IV-I. (A) = E80 TETRAFUNCTIONAL POLYESTER ACRYLATE

| Sample No. | (B) | (A) | LT | HAZE | VISC |
|---|---|---|---|---|---|
| 4-1 | 100 | 0 | 92.0 | 0.13 | 1,110 |
| 4-2 | 90 | 10 | 92.2 | 1.13 | 2,490 |
| 4-3 | 80 | 20 | 92.1 | 0.53 | 2,910 |
| 4-4 | 70 | 30 | Separated into two layers | | |
| 4-5 | 60 | 40 | Separated into two layers | | |
| 4-6 | 50 | 50 | Separated into two layers | | |
| 4-7 | 40 | 60 | Separated into two layers | | |
| 4-8 | 30 | 70 | Separated into two layers | | |
| 4-9* | 20 | 80 | 91.7 | 1.20 | 4,740 |
| 4-10* | 10 | 90 | 91.7 | 1.17 | 4,380 |
| 4-11 | 0 | 100 | 91.8 | 1.63 | 4,170 |

*Comparison Example

TABLE IV-II.

| (A) = E80 TETRAFUNCTIONAL POLYESTER ACRYLATE | | | | | | | |
|---|---|---|---|---|---|---|---|
| Sample No. | T-100 | T-500 | FLEXpc | ADHpc | FLEXsv | ADHsv | STAINsv |
| 4-1 | 2.57 | 9.20 | 0.125 | 100 | 0.500 | 100 | 0 |
| 4-2 | 4.40 | 13.9 | -0.125 | 100 | -0.125 | 100 | 0 |
| 4-3 | 4.14 | 11.3 | -0.125 | 10 | -0.125 | 100 | 0 |
| 4-4 | Separated into two layers | | | | | | |
| 4-5 | Separated into two layers | | | | | | |
| 4-6 | Separated into two layers | | | | | | |
| 4-7 | Separated into two layers | | | | | | |
| 4-8 | Separated into two layers | | | | | | |
| 4-9 | 15.5 | 50.4 | 0.250 | 0 | -0.125 | 0 | 1 |
| 4-10 | 13.1 | 47.2 | -0.125 | 0 | -0.125 | 0 | 1 |
| 4-11 | 16.3 | 47.5 | -0.125 | 0 | -0.125 | 0 | 2 |

Referring to Tables I-I and I-II, it can be observed that in the case of blending (A) E220, a hexafunctional aromatic urethane acrylate, with the silane-based composition (B) of the invention, several trends in the physical properties of the cured coatings emerge. The trends are dependent upon the relative quantities of components (A) and (B).

Tables I-I and I-II clearly illustrate that the abrasion resistance, flexibility and stain resistance of the cured coatings decreases as the experimental composition varies from pure component (B) to pure component (A). In other words, the closer the experimental compositions moves toward the prior art coatings of pure urethane acrylate, the poorer the performance. Indeed, the pure urethane acrylate coating (Sample No. 1-11) showed no adhesion to polycarbonate film.

Accordingly, only the compositions of sample nos. 1-2 through 1-9, inclusive, are deemed to be within the coating composition of our invention. In those samples, the cured compositions exhibited abrasion resistance within the claimed range, i.e., 10 or less for T-100 and 15 or less for T-500. While not all these claimed compositions would be recommended for use on a polycarbonate sheet, or even on rolled sheet vinyl, all would be considered useful on a substrate of vinyl tile.

Tables II-I and II-II illustrate the use of the same component (A) as the samples in Tables I-I and I-II, but having component (A) diluted with isobornylacrylate ("IBA.") Too high a viscosity can make it difficult to apply a uniform coating of desired thickness. Reference to the Tables clearly illustrates the dramatic effect that IBA has on the viscosity. Furthermore, use of the IBA appears to enhance the flexibility of coating compositions (especially on sheet vinyl) without substantially sacrificing the properties of abrasion and stain resistance. Accordingly, Sample Nos. 2-2 through 2-5, inclusive, are deemed to be within the scope of the present invention.

Table III-I and III-II illustrate the use of CN104™, bisphenol A epoxy diacrylate, diluted with IBA, as component (A). In this system it can be seen that only those compositions that are rich in component (B), the silane-based composition, provide the necessary abrasion-resistance to be considered within the scope of the present invention. Thus, only Sample Nos. 3-2 and 3-3 meet the limitations of the present invention.

Tables IV-I and IV-II illustrate the use of E80 tetrafunctional polyester acrylate as component (A). In this system, only those compositions relatively rich in either component (A) or (B) can be blended into a relatively homogeneous coating composition, without the use of a cosolvent. Sample Nos. 4-9 and 4-10, which are rich in the polyester acrylate, exhibit poor abrasion resistance and are, therefore, outside the scope of the present invention. Sample Nos. 4-2 and 4-3, however, exhibit excellent abrasion resistance and are, therefore, within the scope of the invention. Furthermore, Samples 4-2 and 4-3 show excellent flexibility and stain resistance as well as excellent adhesion to sheet vinyl.

From the results reported in Tables IV-I and IV- II, it is not possible to determine whether the compositions represented by Sample Nos. 4-4 through 4-8 may fall within the scope of the present invention. The present inventors have found that seemingly incompatible quantities of specific multifunctional acrylate polymers (A) and the silane-based composition (B) can be blended into an homogeneous coating formulation with the addition of a cosolvent. Diethyleneglycoldiacrylate ("DEGDA") and hexanediol diacrylate are two examples of such a cosolvent.

To demonstrate the advantages of using such cosolvents, 6 parts of E80 and 14 parts of component (B) (which corresponds to example 4-4 in the Tables) were blended, forming the two phase mixture previously reported. The addition of 2 parts of either HDDA or DEGDA cosolvent rendered a single phase solution, eliminating the incompatibility of components (A) and (B) in the selected quantities.

Several additional embodiments of the composition of the invention were prepared (including 4 weight percent Darocure™ 1173 photoinitiator), coated over polycarbonate sheet, Taber panels and sheet vinyl substrates and cured with UV radiation.

The first additional embodiments utilized E8301, an hexafunctional aliphatic urethane diacrylate containing an acrylate polyol diluent as component (A) in combination with the silane-based composition (B). This system behaved in a manner similar to that described in connection with Tables IV-I and IV-II in that the E8301 had limited compatibility with the silane-based composition. A two phase mixture was observed with 30 parts E8301 and 70 parts component (B). Compositions containing between 40 and 80 parts E8301 (per 100 parts of the combined weight of (A) and (B)) had a tendency to gel. The composition with 90 parts E8301 and 10 parts (B) had relatively poor abrasion resistance (T-500 in excess of 20) and is, therefore, outside the scope of the present invention. Compositions having 10 to 30 parts E8301 (balance component (B) for 100 total parts) formed cured coatings with 100 percent adhesion to polycarbonate film. The cured coatings had Taber abrasion values of T-100 of 5 or less and T-500 of 9 or less. Thus, these latter coatings are clearly within the scope of the present invention.

Next, four compositions of the invention were prepared utilizing various admixtures of E220, CN104 and E80 as component (A) in combination with the silane-based composition (B). These compositions were used to coat polycarbonate and sheet vinyl specimens as previously described. The compositions were then tested and the results obtained therefrom are reported below in Tables V-I and V-II.

**TABLE V-I.**

| (A) = ADMIXTURES OF E220, CN104 AND E80. | | | | | | | |
|---|---|---|---|---|---|---|---|
| Sample No. | | (A) | | | | | |
| | (B) | E220 | CN104 | E80 | LT | HAZE | VISC |
| 5-1 | 80 | 10 | 10 | 0 | 91.9 | 0.83 | 1,870 |
| 5-2 | 60 | 20 | 20 | 0 | 91.8 | 1.5 | 3,740 |
| 5-3 | 80 | 0 | 10 | 10 | 92.0 | 0.57 | 2,840 |
| 5-4 | 80 | 10 | 0 | 10 | 92.0 | 1.27 | 3,060 |

**TABLE V-II.**

| (A) = ADMIXTURES OF E220, CN104 AND E80. | | | | | | | |
|---|---|---|---|---|---|---|---|
| Sample No. | T-100 | T-500 | FLEXpc | ADHpc | FLEXsv | ADHsv | STAINsv |
| 5-1 | 3.04 | 11.6 | 0.250 | 100 | 1.00 | 100 | 0 |
| 5-2 | 4.10 | 12.9 | 0.125 | 0 | 1.00 | 100 | 0 |
| 5-3 | 3.46 | 13.1 | 0.250 | 100 | 0.875 | 100 | 0 |
| 5-4 | 3.13 | 11.2 | 0.250 | 100 | 1.00 | 100 | 0 |

The test results presented in Tables V-I and V-II clearly show that very useful coatings can be formulated from admixtures of: polyester acrylates, epoxy acrylates, aromatic urethane acrylates and aliphatic urethane acrylates in combination with (B) the silane-based composition of the invention. In each of Sample Nos. 5-1 through 5-4, the cured compositions exhibited excellent adhesion to a sheet vinyl substrate and excellent stain and abrasion resistance. Only Sample No. 5-2 failed to adhere to polycarbonate.

A fatty acid modified polyester hexa-acrylate from UBC Radcure, Inc. ("UBC") of Louisville, KY (sold as Ebecryl™ Resin 450, hereinafter "E450") is described in UBC's product literature as useful for clear varnishes. UBC's product literature further describes E220 (a multifunctional aromatic urethane acrylate) as being useful as a wood coating.

In accordance with the methods previously described, the present inventors coated white pine wood substrates with E220 (75 parts E220 diluted with 21 parts HDDA) and E450 (81 parts E450 and 15 parts HDDA). Each formulation included 4 percent Darocure™ 1173 and the coated wood substrates were UV cured. The cross-hatch adhesion test was conducted on the coated wood substrates and only 10 percent and 15 percent, respectively, of the E450 and E220 coatings remained.

Thereafter, appropriate amounts of the silane-based composition, component (B) were added to each of the above formulations so that the final formulations comprised 26 percent component (B), the weight percent of photoinitiator and the ratio of multifunctional acrylate polymer to HDDA diluent remaining constant. When these formulations were applied to a wood substrate (white pine) and cured, the cross-hatch adhesion test resulted in 85 and 100 percent, respectively, of the E220 and E450 coatings remaining. No substantial difference in abrasion resistance was, however, noted and these compositions are outside the scope of the present invention for poor abrasion resistance.

Next, E80 (a tetrafunctional polyester acrylate, Ebecryl 80™, available from and described by UBC in its product literature as being useful as a varnish and topcoat for wood) and E8301 (a hexafunctional aliphatic urethane diacrylate available from and described by UBC as being as a coating with scratch and abrasion resistance) were investigated. 85 parts of the E80 were diluted with 11 parts IBA and 78 parts of the E8301 were diluted with 18 parts of trimethylolpropane triacrylate ("TMPTA.") Four weight percent photoinitiator was added to each.

Next, appropriate amounts of the silane-based composition, component (B), were added to each of the above formulations so that the final formulations comprised 26 percent component (B), the weight percent of photoinitiator and the ratio of multifunctional acrylate polymer to diluent remained constant.

When these four formulations were applied to wood (white pine) and cured, the cross-hatch adhesion test revealed no substantial difference in the formulations with and without component B, the silane-based composition (only the E8301-based compositions had 100 percent adhesion.) Likewise, the cured coatings containing the E80 multifunctional acrylate polymer showed no substantial difference in abrasion resistance with and without component (B), the silane-based composition. However, the cured coatings which included the E8301 multifunctional acrylate polymer showed a remarkable increase in abrasion resistance with the addition of 26 weight percent component (B). Without component (B), the E8301 coating had a T-100 of 4.4 and T-500 of 43.7. With component (B), the E8301 had a T-100 of 2.6 and a T-500 of 9.7. This last composition is clearly within the scope of the present invention.

It is important to note that the results of testing for abrasion resistance as reported herein (Taber Tests) are all carried out on polycarbonate Taber panels. This is because the test operates on the difference in light transmission (reported in the unabraded state as "LT" in the TABLES) of the unabraded and abraded specimens. Accordingly, testing abrasion resistance by this Taber method requires that the substrate be transparent. Thus, abrasion resistance reported directly above was not carried out on the white pine substrates.

The preceding examples of the composition of the invention make it clear that specific embodiments of the invention may be selected for specific applications, depending on the nature of the substrate sought to be protected. As previously mentioned, flexibility in the coating is not an important feature when the coating is to be applied over a substrate of wood or tile flooring. Flexibility, however, is extremely important if the coating is to be applied over sheet vinyl flooring , which is intended to be stored in a rolled configuration. In all cases, however, the specific embodiment of the invention needs to exhibit the properties of abrasion-resistance and adhesion to the given substrate.

## Claims

**1.** A radiation-curable composition for forming an abrasion-resistant coating on at least one substrate, said composition comprising:

(A) a multifunctional acrylate polymer selected from polyester acrylates, epoxy acrylates, urethane acrylates and admixtures of the aforesaid; and

(B) a silane-based composition comprising:

(a) a Michael adduct formed from:

(1) a multifunctional acrylate monomer; and

(2) an aminofunctional silane having the following formula:

$$R_2\overset{\overset{R'}{|}}{Si}QNZH$$

wherein:

R is an alkoxy or alkyl group having 1 to 4 carbon atoms, which R groups may be the same or different;

R' is an alkoxy group;

Q is a divalent hydrocarbon group; and

Z is hydrogen or a monovalent hydrocarbon group;

said multifunctional acrylate monomer being present in an amount greater than a two-to-one Michael adduct equivalency with respect to said aminofunctional silane; and

(b) colloidal silica;

said component (A) being present in at least 5 parts per 100 parts, by weight, of the sum of components (A) and (B),

said composition, when cured, exhibiting a Taber abrasion resistance of 10 or less for T-100 and 15 or less for T-500; and

said composition exhibiting 100 percent adhesion on a cross-hatch adhesion test, when cured on said at least one substrate.

**2.** A composition in accordance with claim 1 wherein said at least one substrate is wood, sheet vinyl, vinyl tile or polycarbonate.

3. A composition in accordance with claim 1 further comprising a photoinitiator.

4. A composition in accordance with claim 1 further comprising a cosolvent in which both components (A) and (B) are soluble.

5. A composition in accordance with claim 4 wherein said cosolvent is an acrylate monomer.

6. A composition in accordance with claim 1 wherein said component (A) is diluted with a diluent to lower its viscosity.

7. A composition in accordance with claim 5 wherein said acrylate monomer is selected from diethyleneglycol diacrylate, isobornylacrylate and hexanediol diacrylate.

8. A composition in accordance with claim 1 further comprising said cured coating exhibiting a value of 1 or less when subjected to a yellow dye stain test.

9. An article of manufacture comprising a substrate coated with the cured abrasion-resistant coating composition of claim 1.

10. An article of manufacture in accordance with claim 9 wherein said substrate is sheet vinyl and said cured coating on said substrate shows no visible signs of cracking when said coated substrate is subjected to a guided bend of 180° about a mandrel having a diameter of 0.250 inch (6.4 mm) or less.

11. An article of manufacture in accordance with Claim 10 wherein said coating on said substrate has a thickness between 3 and 5 micrometers.

European Patent Office

# EUROPEAN SEARCH REPORT

Application Number
EP 95 30 0730

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | EP-A-0 423 713 (TAKEDA CHEMICAL INDUSTRIES)<br>* page 4, line 2 - page 8, line 40 *<br>--- | 1-11 | C09D4/00<br>C09D4/06<br>C09D167/07<br>C08F8/42<br>C08F290/06<br>C08F290/14 |
| D,Y | EP-A-0 408 047 (DOW CORNING CORPORATION)<br>* the whole document *<br>& US-A-5 260 350<br>----- | 1-11 | |
| | | | TECHNICAL FIELDS SEARCHED (Int.Cl.6) |
| | | | C09D<br>C08F |

The present search report has been drawn up for all claims

| Place of search | Date of completion of the search | Examiner |
|---|---|---|
| THE HAGUE | 21 April 1995 | Andriollo, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)